# EUROPEAN PATENT APPLICATION

(11) **EP 2 093 937 A1**
(43) Date of publication of application: **26.08.2009**
(21) Application number: 08860389.9
(22) Date of filing: 20.11.2008
(51) Int. Cl.: H04L 12/24

(54) **A METHOD AND APPARATUS FOR REALIZING RING NETWORK PROTECTION**

(30) Priority: 28.11.2007 CN 200710168174
(71) Applicant: Huawei Technologies Co., Ltd., Longgang District Shenzhen Guangdong 518129 (CN)
(72) Inventor: ZHOU, Yingliang, Shenzhen Guangdong 518129 (CN)
(74) Representative: Epping - Hermann - Fischer
(86) International application number: PCT/CN2008/073124
(87) International publication number: WO 2009/074049

(57) **Abstract**

A method of ring network protection is disclosed. the node in a ring network determines a section that suffers a fault and determines a timeslot of a service impacted by the fault on the node according to section ring formation information and service route information preconfigured on the node when trigger conditions of protection switching are fulfilled, and switches the service onto a protection channel that bypasses the section that suffers the fault, where: the section ring formation information lists the information about the sections included in a ring consecutively in a preset direction; and the information about the sections includes preassigned IDs of sections between adjacent nodes in the ring network; and the service route information lists the information about the trails that use the node as a source node and a sink node of the service in each specific timeslot. A network element device is disclosed herein. The technical solution under the present invention shortens the service switching time, and improves the signal quality after switching.

## Description

### FIELD OF THE INVENTION

The present invention relates to optical network technologies, and in particular, to a method and an apparatus of ring network protection.

### BACKGROUND

In the traditional Synchronous Digital Hierarchy (SDH) Synchronous Optical Network (SONET) or Optical Transport Network (OTN) field, ring networking is an important networking mode if the effectiveness (utilization ratio of channels), reliability and cost-efficiency of the network are taken into consideration. In order to improve the robustness of the ring network, all the nodes on the ring need to provide an automatic protection switching mechanism.

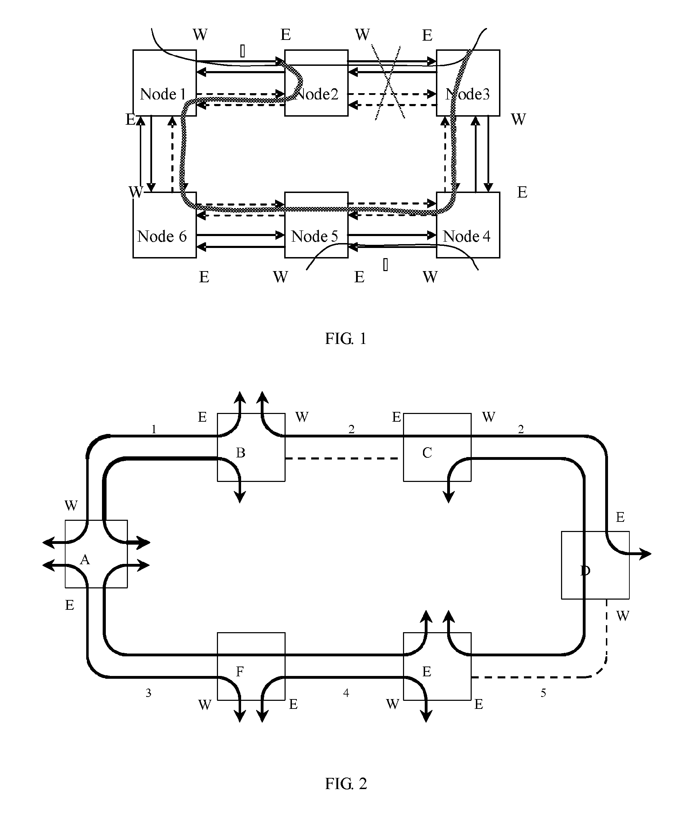

The prior art 1 provides a ring network protection mechanism in an SDH system. As shown in FIG. 1, six nodes on the ring make up a multiplex section (MS) shared ring network, where W represents West and E represents East. If the working channel and the protection channel are in the same fiber, namely, if every two nodes are connected through only two fibers, the network is called a 2-fiber ring network. If the working channel and the protection channel are in two separate fibers, namely, if every two nodes are connected through four fibers, the network is called a 4-fiber ring network. The format of the Automatic Protection Switching (APS) byte for carrying switching requests between nodes is:
switching request|destination node ID|source node ID|bridge switching state.

As shown in FIG. 1, the solid arrowhead represents a working channel, and the dotted arrowhead represents a protection channel. Service 1 exists between node 1 and node 3, and service 2 exists between node 4 and node 5. The two services occupy the same timeslot of different sections. Supposing that the working channel and the protection channel between node 2 and node 3 fail, if node 2 and node 3 detect that the working channel signals and the protection channel signals between them have failed, node 2 and node 3 send an APS request inclusive of a switching request to the opposite party reciprocally. Other nodes (node 1, nodes 4-6) on the ring receive the APS request sent by node 2 and node 3, and then analyze the information about the source node and the sink node in the APS request to know that the switching request is not intended for the nodes themselves. Therefore, such nodes let the service pass, and the end nodes 2 and 3 perform ring switching for service 1. Service 1 is bridged and switched to the protection channel on the ring, and therefore, is recovered.

As analyzed above, as regards switching of service 1 between node 1 and node 3, if node 1 and node 3 perform switching directly, the trail subsequent to switching is the optimum trail. However, the nodes that actually perform the switching operation are node 2 and node 3. Consequently, the transmission trail of the service is longer than necessary. When the distance between nodes is very long, such a switching mode affects the protection switching time and the signal quality, and is rather inappropriate.

Likewise, when the working channel and the protection channel between node 4 and node 5 fail, node 4 and node 5 also perform switching to switch service 2 to the protection channel. If the foregoing two failures coexist, according to the rules of switching of the nodes between both sides of a failed section in the prior art, node 2, node 3, node 4, and node 5 perform switching concurrently. Consequently, misconnection occurs because service 1 and service 2 contend for the same protection channel.

As shown in FIG. 2, the prior art 2 provides a ring network protection mechanism in an OTN system:

As shown in FIG. 2, six nodes on the ring make up an Optical channel Data Unit (ODUk) shared ring network. The outer arrowhead represents the ODUk working service that needs to be protected, and the inner arrowhead represents the protection channel that needs to be used in the case of protection switching. The working service on each section of the ring has a service number. No duplicate service number exists on different sections. When multiple services in the same section need to be protected, each service needs to be configured in a different protection group, and undergoes protection switching separately when necessary. The format of the signaling for carrying switching requests between nodes is:
switching request|long and short trail flag (L or S)|service ID requested to be bridged|bridged service ID|bridge switching flag.

As shown in FIG. 2, service 2 between node B and node D is interrupted. After node B detects service interruption, node B needs to notify the failure information to node D through an APS request so that both node B and node D can perform ring protection for service 2. After receiving the APS request between node B and node D, other nodes on the ring (node A, node C, node E, or node F) analyze the service ID of the service requested to be bridged in the APS request, thus knowing that the switching request is intended for the nodes themselves. Therefore, the intermediate NE lets the service pass, and service 2 is recovered on the protection channel ultimately.

In the process of developing the present invention, the inventor detects at least these defects in the ring network protection mechanism in the prior art 2:
One section of a ring network can have only one protected service. When multiple services on the physical section need to be protected, multiple protection groups need to be configured in different logical ring networks. When one section fails, multiple protection groups of multiple services on the section perform switching consecutively, and the interruption of the service which performs switching later tends to be rather long.

### SUMMARY

A method of ring network protection is disclosed in an embodiment of the present invention to shorten switching time of a service.

The ring network protection method includes:
determining, by a node in a ring network, a section that suffers a fault and determining a timeslot of a service impacted by the fault on the node according to section ring formation information and service route information preconfigured on the node when trigger conditions of protection switching are fulfilled; and
switching the service onto a protection channel that bypasses the section that suffers the fault, where the section ring formation information lists the information about the sections included in a ring consecutively in a preset direction, the information about the sections includes preassigned IDs of sections between adjacent nodes in the ring network, and the service route information lists the information about the trails that use the node as a source node and a sink node of the service in each specific timeslot.

A network element device is disclosed in an embodiment of the present invention. The network element device includes:
a section ring formation information module, adapted to: configure section ring formation information, where: the section ring formation information lists the information about the sections included in a ring consecutively in a preset direction; and the information about the sections includes preassigned IDs of sections between adjacent nodes in the ring network;
a service route information module, adapted to configure service route information, where the service route information lists the information about the trails that use the node as a source node and a sink node of the service in each specific timeslot;
a switching control module, adapted to: determine the section that suffers the fault and determine the timeslot of the service impacted by the fault on the node according to the section ring formation information configured in the section ring formation information module and the service route information configured in the service route information module when the trigger conditions of protection switching are fulfilled, and output the section ID and the service timeslot information; and
a switching module, adapted to switch the service in the timeslot indicated by the timeslot information to the protection channel that bypasses the section corresponding to the section ID according to the section ID and the timeslot information output by the switching control module.

It is thus evident that: In the foregoing technical solution, a section ID is set, the service impacted by the fault is determined according to the section ID and the service route information carried in the fault information, and only the service impacted by the fault is switched, thus preventing the switched service from passing through more trails than necessary. Moreover, multiple protected services can exist on one section. Fault detection is performed on the service layer, and the service is switched on the channel layer in terms of the source node and the sink node of the service, thus shortening the switching time of the service and improving the signal quality after switching.

### BRIEF DESCRIPTION OF THE DRAWINGS

FIG. 1 shows a ring network protection mechanism in an SDH system in the prior art 1;

FIG. 2 shows a ring network protection mechanism in an OTN system in the prior art 2;

FIG. 3 shows a networking mode of ring network protection and a mode of configuring a single-node protection group in an embodiment of the present invention;

FIG. 4 shows a mode of configuring section ring formation information and service route information on each node of a ring network in an embodiment of the present invention;

FIG. 5 shows an application scenario in an embodiment of the present invention;

FIG. 6 is a flowchart specific to the application scenario shown in FIG. 5 in an embodiment of the present invention;

FIG. 7 shows another application scenario in an embodiment of the present invention;

FIG. 8 is a flowchart specific to the application scenario shown in FIG. 7 in an embodiment of the present invention; and

FIG. 9 is a block diagram of nodes in a ring network in an embodiment of the present invention.

### DETAILED DESCRIPTION

In order to make the technical solution, objectives and merits of the present invention clearer, the present invention is hereinafter described in detail by reference to accompanying drawings and preferred embodiments.

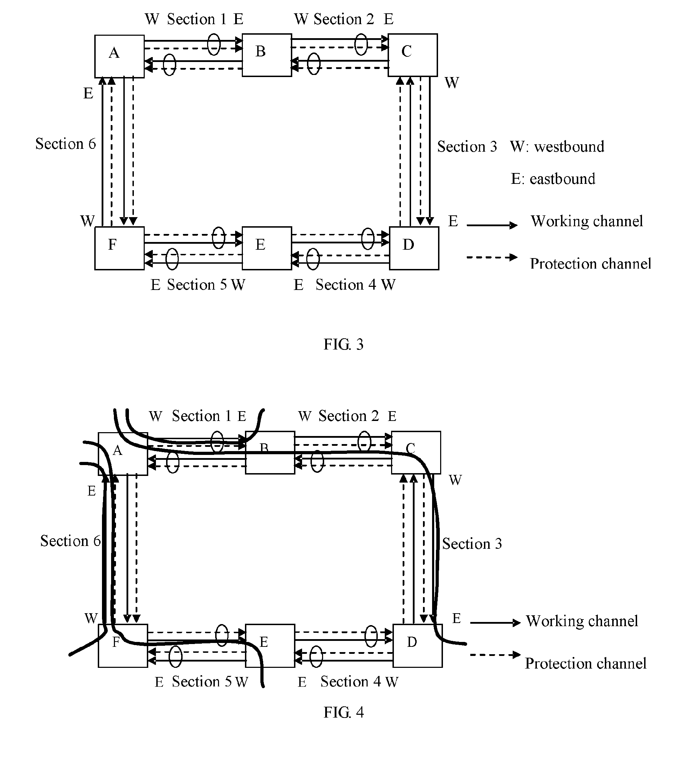

FIG. 3 shows a networking mode of ring network protection and a mode of configuring a single-node protection group in an embodiment of the present invention, including the following:
1. A logical protection group is configured on each node of the ring network. The physical channels (optical interface or ODUk timeslot) corresponding to the eastbound and westbound working channel and protection channel are specified. The working channel and the protection channel may be in the same fiber (to form a 2-fiber ring) or in different fibers (to form a 4-fiber ring).
2. The eastbound channel and the westbound channel between two adjacent nodes are interconnected to form a closed ring network. In order to fulfill the 50 ms protection switching time, no more than 16 nodes can exist on the ring. Therefore, the number of sections on the ring is not greater than 16. Each section on the ring is numbered (from 0 to 15), and no duplicate serial number of the section is allowed among different sections.

On the basis of the networking mode of ring network protection and the mode of configuring a single-node protection group shown in FIG. 3, the services carried in the ring network are shown in FIG. 4, in which the thick solid line represents a service trail. As shown in FIG. 4, the protection group is separated from the protected service. In this way, the protection group can be configured more flexibly, and the intelligent features of the optical network such as dynamic configuration of services are supported.

Section ring formation information and service route information need to be configured on each node of the ring network in the embodiment of the present invention. The section ring formation information can be illustrated in the form of figures or tables. For example, the section ring formation information is rendered as a section ring chart. On each node, the section ring formation information may be set up from west to east or from east to west so long as the section ring formation information is set up in the same sequence for all nodes on the ring. In this embodiment, it is assumed that the section ring formation information is set up from west to east. The service route information may also be rendered in a tabular form. For example, the section ring formation information and the service route information of node A in FIG. 4 are rendered in Table 1:

**Table 1**

| Section ring formation information of node A | | | | | | |
|---|---|---|---|---|---|---|
| Section 1 | Section 2 | Section 3 | Section 4 | Section 5 | Section 6 | |
| Service route information of node A | | | | | | |
| Westbound service routing table | | | | Eastbound service routing table | | |
| Service timeslot | Source | Sink | | Service timeslot | Source | Sink |
| Timeslot 1 | Section 1 | Section 1 | | Timeslot 1 | Section 6 | Section 6 |
| Timeslot 2 | Section 1 | Section 3 | | Timeslot 2 | Section 6 | Section 5 |
| ··· | ··· | ··· | | ··· | ··· | ··· |

The section ring formation information of node A lists the sections included in a ring that uses node A as a source node and a sink node from west to east. As shown in FIG. 4, starting from node A, the sections from west to east are: section 1, section 2, section 3, section 4, section 5, and section 6. Likewise, the section ring formation information of node C is: section 3, section 4, section 5, section 6, section 1, and section 2; and the service route information of node C lists the trail of the westbound service and the eastbound service of each timeslot. This trail may be denoted by the section where the source node and the sink node of the service are located, or by the section traversed by the trail. The section ring formation information and the service route information of other nodes may be set up in a similar way.

The ring chart and the service route information on each node may be configured by the user manually, or set up by software automatically by means of a search protocol so long as all nodes on the ring set up their own section ring formation information and service route information in the same way.

When a node on the ring detects failure of a working channel on a section, or when other switching conditions are fulfilled (for example, forced switching, manual switching, exercise switching), the node needs to notify the information such as section state request of this section, ID of this section, long trail ID, and short trail ID to other nodes on the ring. Such information constitutes a protection signaling. The section state request includes switching causes, for example, Signal Failure (SF), Signal Deterioration (SD), forced switching, manual switching, or exercise switching. Generally, protection signaling is carried through overhead (either channel-associated overhead or not). Table 2 defines the format of a protection signaling:

**Table 2**

| APS1 | | | | | | | | APS2 | | | | | | | |
|---|---|---|---|---|---|---|---|---|---|---|---|---|---|---|---|
| 1 | 2 | 3 | 4 | 5 | 6 | 7 | 8 | 1 | 2 | 3 | 4 | 5 | 6 | 7 | 8 |
| Section state request | | | | | | | | Section ID | | | | Long-trail and short-trail flag | Bridge switching flag | | |

The length of a protection signaling is 2 bytes. The first byte is APS1, which denotes the section state request and indicates the switching causes and the switching mode. The second byte is APS2. The first 4 bits of APS2 denote a section ID, and the next bit denotes a flag of long trail and short trail, and the last 3 bits denote a bridge switching flag. The bridge switching flag is optional, and the remainder is mandatory. In the APS bytes in the prior art, one byte is required for carrying the source node ID and the sink node ID, another byte is required for the section state request, and another byte is required for the bridge switching flag, amounting to 4 bytes. By comparison, the APS bytes under the present invention require only 2 bytes, thus saving the signaling bandwidth effectively. The functions of the section state request of the ALPS1 are described in Table 3:

**Table 3**

| APS1 byte functions | | |
|---|---|---|
| Section state request | | Meaning |
| 11111111 | | Reserved for extension |
| ...... | | |
| 00010011 | | |
| 00010010 | | Lockout protection channel (LP) |
| 00010001 | | Signal failure of protection channel (SF-P) |
| 00010000 | | SF ring switching, working SF, protection SF SF-R |
| 00001111 | | SF ring switching, working SD, protection SF SF-RP |
| 00001110 | | SF ring switching, working SF, protection SD SF-RW |
| 00001101 | | Forced section switching (FS-S) |
| 00001100 | | Forced ring switching (FS-R) |
| 00001011 | | Protection channel signal deterioration (SD-P) |
| 00001010 | | SD section switching (SD-S) |
| 00001001 | | SD ring switching (SD-R) |
| 00001000 | | Manual section switching (MS-S) |
| 00000111 | | Manual ring switching (MS-R) |
| 00000110 | | Section switching Waits To Restore (WTR-S) |
| 00000101 | | Ring switching Waits To Restore (WTR-R) |
| 00000100 | | Exercise section switching (EXER-S) |
| 00000011 | | Exercise ring switching (EXER-R) |
| 00000010 | | Reverse request of section switching (RR-S) |
| 00000001 | | Reverse request of ring switching (RR-R) |
| NR | 00000000 | No Request |

**Table 4**

| Table 4 defines APS2 | | |
|---|---|---|
| Section ID | Long-trail and short-trail flag | Bridge switching flag |
| Bits 1-4 | Bit 5 | Bits 6-8 |
| Section ID: 0-15 | 0: Short trail (S) | 000: Idle |
| | 1: Long trail (L) | 001: Bridge |
| | | 010: Bridge and switching |
| | | 011: Reserved |
| | | 100: Reserved |
| | | 101: Reserved |
| | | 110: Reserved |
| | | 111: Reserved |
| | | |

The contents of Table 3 and Table 4 are for the exemplary purpose only, and do not constitute limitation on the present invention. Moreover, any content item in ALPS1 or APS2 is omissible and serves as a default value.

The conditions of triggering protection switching of each node on the ring include three aspects:
1. This node detects the channel failure state (SF/SD).
2. This node receives an external switching command (forced switching, manual switching, and so on).
3. This node receives an APS request from other nodes.

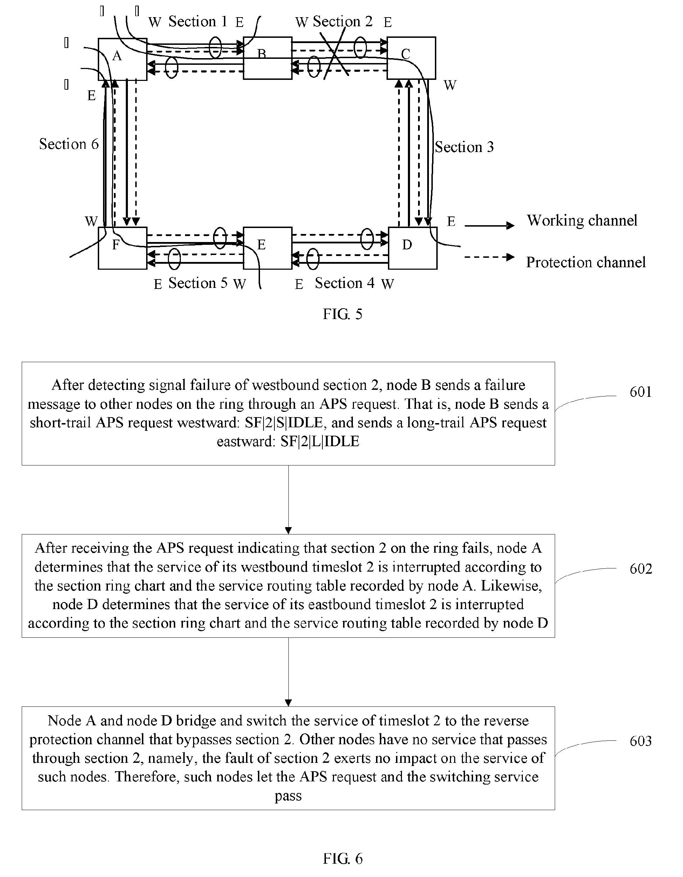

The protection switching process in an embodiment of the present invention is described below through example 1. As shown in FIG. 5, supposing that fiber cut occurs in section 2 between node B and node C, then the service of westbound timeslot 2 of node A is interrupted. As shown in FIG. 5, the switching process includes the following steps:

Step 601: After detecting signal failure of westbound section 2, node B sends a failure message to other nodes on the ring through an APS request. That is, node B sends a short-trail APS request westward: SF|2|S|IDLE, and sends a long-trail APS request eastward: SF|2|L|IDLE. In this way, all the intermediate nodes on the ring receive the APS request indicating that section 2 on the ring fails.

Step 602: After receiving the APS request indicating that section 2 on the ring fails, node A determines that the service of its westbound timeslot 2 is interrupted according to the section ring formation information and the service route information recorded by node A. Likewise, node D determines that the service of its eastbound timeslot 2 is interrupted according to the section ring formation information and the service route information recorded by node D.

Step 603: Node A and node D bridge and switch the service of timeslot 2 to the reverse protection channel that bypasses section 2. Other nodes have no service that passes through section 2, namely, the fault of section 2 exerts no impact on the service of such nodes. Therefore, such nodes let the APS request and the switching service pass. Finally, the service between node A and node D is recovered, and the source-and-sink switching function for such a service is implemented.

In the switching process illustrated in example 1, the service is switched in terms of the source node and the sink node of the service, thus shortening the switching time of the service and improving the signal quality after switching.

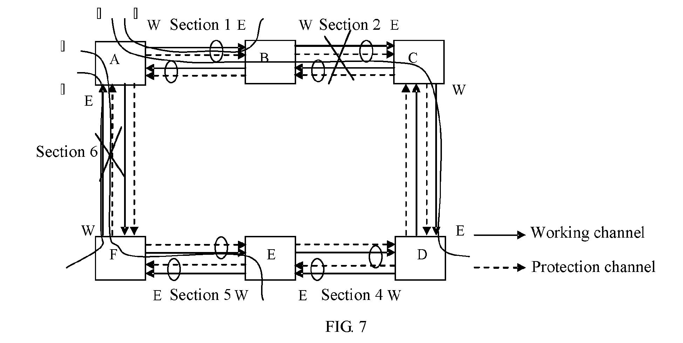

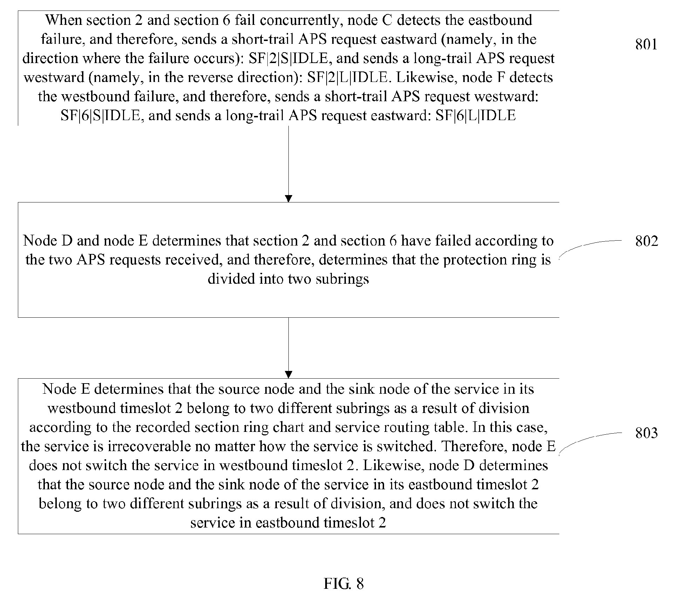

The following example 2 illustrates how to prevent misconnection of services in the case that more than one instance of protection switching occurs in the protection switching process in an embodiment of the present invention. As shown in FIG. 7, supposing that fiber cut occurs in section 2 between node B and node C and fiber cut also occurs in section 6 between node A and node F, then the service of eastbound timeslot 2 of node D is interrupted and the service of westbound timeslot 2 of node E is also interrupted. If the service is switched between both sides of the failed section as recommended by G.841, two services are switched concurrently, thus leading to misconnection because both services contend for the same protection channel. In this embodiment, misconnection is prevented because each node records the section ring formation information and the service route information. As shown in FIG. 8, the switching process includes the following steps:

Step 801: When section 2 and section 6 fail concurrently, node C detects the eastbound failure, and therefore, sends a short-trail APS request eastward (namely, in the direction where the failure occurs): SF|2|S|IDLE, and sends a long-trail APS request westward (namely, in the reverse direction): SF|2|L|IDLE. Likewise, node F detects the westbound failure, and therefore, sends a short-trail APS request westward: SF|6|S|IDLE, and sends a long-trail APS request eastward: SF|6|L|IDLE.

Step 802: Node D and node E on the ring receive the foregoing two long-trail APS requests in the east and west directions, indicating that section 2 and section 6 on the ring have failed. In the case that more than one section fails, the ring network is unable to connect into an entirety and is divided into multiple subrings: If two sections fail, the ring network is divided into two parts, namely, two subrings; if three sections fail, the ring network is divided into three parts, namely, three subrings, and so on. If the source node and the sink of the service belong to different subrings, it is impossible to set up a connection between the source node and the sink no matter how the service is switched. In this embodiment, node D and node E determine that section 2 and section 6 have failed according to the two APS requests received, and therefore, determine that the ring network is divided into two subrings.

Step 803: Node D also determines that the source node and the sink node of the service in its eastbound timeslot 2 belong to two different subrings as a result of division, and therefore, does not switch the service in eastbound timeslot 2, thus avoiding misconnection of the service. Likewise, node E knows that the source node and the sink node of the service in its westbound timeslot 2 belong to two different subrings as a result of division. In this case, the service cannot be recovered no matter how the service is switched. Therefore, node E does not switch the service in westbound timeslot 2.

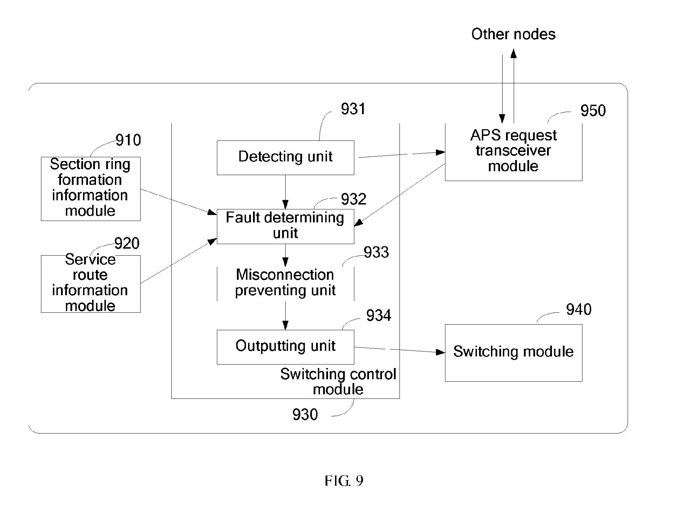

FIG. 9 is a block diagram of the nodes in the ring network in this embodiment. The nodes include:
a section ring formation information module 910, adapted to configure section ring formation information, where the section ring formation information lists the rings that use the section ring formation information module as a source node and a sink node and lists the sections included by the rings consecutively in a specific direction, and the specific direction is a direction from west to east or a direction from east to west and keeps consistent for all the nodes on the ring;
a service route information module 920, adapted to configure service route information, where the service route information lists the layout of the source node and the sink node of the westbound service and the eastbound service in each timeslot;
a switching control module 930, adapted to: determine the section that suffers the fault and determine the timeslot of the service impacted by the fault on the node according to the section ring formation information configured in the section ring formation information module 910 and the service route information configured in the service route information module 920 when the trigger conditions of protection switching are fulfilled, and output the section ID and the timeslot ID; and
a switching module 940, adapted to switch the service in the timeslot represented by the timeslot ID to the protection channel that bypasses the section corresponding to the section ID according to the section ID and the timeslot ID output by the switching control module.

Each section of a ring network may include multiple protected services. When a section fails, all the services on the section are protected concurrently only if the whole ring network performs switching in a single attempt. Therefore, the switching time of all services is short enough.

The switching control module 930 includes:
a detecting unit 931, adapted to detect whether signal failure or signal deterioration occurs on a section in the ring network, wherein: if such is the case, the trigger conditions of protection switching are fulfilled; and the detecting unit 931 generally detects only two sections adjacent to the switching control module;
a fault determining unit 932, adapted to: determine the ID of the section that suffers a fault and determine the ID of the timeslot of the service impacted by the fault on the switching control module according to the section ring formation information configured in the section ring formation information module 910 and the service route information configured in the service route information module 920 when the trigger conditions of protection switching are fulfilled; and
an outputting unit 934, adapted to output the section ID and the timeslot ID determined by the fault determining unit 932 to the switching module 940.

The switching control module 930 further includes an APS transceiver module 950. When the detecting module 931 detects signal failure or signal deterioration on a section in the ring network, the detecting unit notifies the section ID of the section that suffers from the signal failure or signal deterioration to the APS request transceiver module 950.

Therefore, the APS request transceiver module 950 generates an APS request inclusive of the section ID according to the section ID received from the detecting unit 931, and sends the APS request to other nodes in the ring network.

The APS request transceiver unit 950 is further adapted to receive the APS requests from other nodes in the ring network. When the APS request transceiver module receives an APS request, the trigger conditions of protection switching are fulfilled.

The switching control module 930 further includes a misconnection preventing unit 933, which is adapted to: judge whether the source node and the sink node of the service can be connected through the node in the ring network after the fault determining unit 932 determines the section that suffers the fault and the service impacted by the fault on the switching control module; and, if the source node and the sink node of the service can be connected, trigger the outputting unit 934 to output the section ID of the section and the timeslot ID of the service.

The technical solution under the present invention brings the following benefits:
The service is switched in terms of the source node and the sink node of the service, thus shortening the switching time of the service and improving the signal quality after switching;
through the source-and-sink switching for the service, the service misconnection is prevented;
each section of a ring network may include multiple protected services. When a section fails, all the services on the section are protected concurrently only if the whole ring network performs switching in a single attempt. Therefore, the switching time of all services is short enough;
the protection group is separated from the protected service. In this way, the protection group can be configured more flexibly, and the intelligent features of the optical network such as dynamic configuration of services are supported; and
as against the 4-byte APS signaling in the prior art 1, the embodiments of the present invention require only 2-byte APS signaling, thus saving signaling bandwidth.

Although the invention has been described through some exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method of ring network protection, comprising:
determining, by a node in a ring network, a section that suffers a fault and determining a timeslot of a service impacted by the fault on the node according to section ring formation information and service route information preconfigured on the node when trigger conditions of protection switching are fulfilled, and switching the service in the timeslot onto a protection channel that bypasses the section that suffers the fault, wherein:
the section ring formation information lists rings that use the node as a source node and a sink node and lists sections included in the rings consecutively in a preset direction; and the service route information lists information about trails that use the node as the source node and the sink node of the service in each specific timeslot.

2. The method of claim 1, wherein the trigger condition(s) of protection switching may be any one or any combination of:
the node receives an Automatic Protection Switching (APS) request, from other nodes;
the node detects failure of a working channel of the section; and
the node receives an external switching command.

3. The method of claim 1, further comprising:
letting, by the node in the ring network, the service pass through the protection channel if determining that the service of the node is not impacted according to the preconfigured section ring formation information and service route information.

4. The method of claim 3, wherein if the trigger condition of protection switching is that the node detects failure of the working channel of the section, the method further comprises:
sending, by the node, an Automatic Protection Switching request, APS request, to other nodes in the ring network.

5. The method of claim 4, wherein:
the APS request comprises: a section state request indicative of switching causes and a switching mode, a section ID, a long-trail ID, and a short-trail ID.

6. The method according to any one of claims 1-5, wherein before the service is switched onto the protection channel, the method further comprises:
judging, by the node in the ring network, whether the source node and the sink node of the service impacted by the fault can be connected through the node in the ring network; and
if such is the case, switching the service in the timeslot onto the protection channel that bypasses the section that suffers the fault.

7. The method of claim 6, wherein:
the quantity of the nodes in the ring network is less than or equal to 16.

8. A network element device, comprising:
a section ring formation information module, adapted to: configure section ring formation information, wherein the section ring formation information lists rings that use a node in a ring network as a source node and a sink node and lists sections included in the rings consecutively in a preset direction;
a service route information module, adapted to configure service route information, wherein the service route information lists information about trails that use the node in the ring network as the source node and the sink node of a service in each specific timeslot;
a switching control module, adapted to determine a section that suffers a fault and determine the timeslot of the service impacted by the fault on the node according to the section ring formation information configured in the section ring formation information module and the service route information configured in the service route information module when trigger conditions of protection switching are fulfilled; and
a switching module, adapted to switch the service in the timeslot onto a protection channel that bypasses the section that suffers the fault.

9. The network element device of claim 8, wherein the switching control module comprises:
a detecting unit, adapted to detect whether the trigger conditions of protection switching are fulfilled;
a fault determining unit, adapted to determine an ID of the section that suffers the fault and determine the timeslot of the service impacted by the fault on the node according to the section ring formation information configured in the section ring formation information module and the service route information configured in the service route information module when the trigger conditions of protection switching are fulfilled; and
an outputting unit, adapted to output the section ID and the timeslot determined by the fault determining unit to the switching module.

10. The network element device of claim 9, wherein:
the detecting unit is adapted to detect any one or any combination of: whether the node receives an Automatic Protection Switching (APS) request, from other nodes, or whether failure occurs on a working channel of the section in the ring network, and whether the node receives an external switching command; and, if such is the case, determine that the trigger conditions of protection switching are fulfilled.

11. The network element device of claim 9, wherein the node further comprises:
an APS request transceiver module, adapted to: receive the APS request from other nodes, and generate the APS request inclusive of the section ID according to the section ID received from the detecting unit, and send the APS request to other nodes in the ring network.

12. The network element device according to any one of claims 9-11, wherein the switching control module further comprises:
a misconnection preventing unit, adapted to: judge whether the source node and the sink node of the service can be connected through the node in the ring network after the fault determining unit determines the section that suffers the fault and the timeslot of the service impacted by the fault on the node; and, if the source node and the sink node of the service can be connected, trigger the outputting unit to output the section ID of the section and timeslot information of the service to the switching module.
